# EUROPEAN PATENT SPECIFICATION

(11) **EP 4 376 037 B1**
(45) Date of publication and mention of the grant of the patent: **14.10.2026**
(21) Application number: 22845767.7
(22) Date of filing: 30.06.2022
(51) Int. Cl.: H01G 2/10, H01G 4/228, H01G 4/224, H01G 4/38, H01G 4/232, H01G 4/40, H01G 4/32

(54) **COMPOSITE CAPACITOR**
ZUSAMMENGESETZTER KONDENSATOR
CONDENSATEUR COMPOSITE

(30) Priority: 19.07.2021 JP 2021118713
(43) Date of publication of application: 29.05.2024
(73) Proprietor: Nichicon Corporation, Kyoto-shi, Kyoto 604-0845 (JP)
(72) Inventor: MORI, Takashi, Kyoto-shi, Kyoto 604-0845 (JP); NOSE, Takashi, Kyoto-shi, Kyoto 604-0845 (JP)
(74) Representative: Global IP Europe Patentanwaltskanzlei
(86) International application number: PCT/JP2022/026230
(87) International publication number: WO 2023/002831

(56) References cited:
- DE-A1- 102018 219 218
- JP-A- 2005 347 561
- JP-A- 2005 347 561
- JP-A- 2008 130 641
- JP-A- 2011 142 266
- JP-A- 2013 030 577
- JP-A- 2017 059 572
- JP-A- S62 117 312
- JP-B2- 6 527 002
- JP-U- H01 153 627
- US-A1- 2019 378 658
- US-A1- 2020 328 032
- US-B2- 10 109 422

## Description

### FIELD

The present invention relates to a composite capacitor.

### BACKGROUND

In recent inverter smoothing capacitors, there is a need to reduce noise as switching elements operate faster. An inverter has three or two sets of legs. Each leg is a pair of complementary high-side and low-side switching elements connected in series and turned ON/OFF alternately. Recently, the leg switching elements operate faster and faster, increasing the intensity of induced noise.

A smoothing capacitor (main capacitor) is bridge-connected to a high-side power line and a low-side power line connecting the legs in parallel in the inverter for supplying power to any AC load, such as a motor. For PWM control of the inverter, the DC voltage level of the smoothing capacitor should be stable.

Fluctuations in the DC voltage level due to the high-frequency noise associated with the faster switching operations will hinder precise control of electrical devices, including the motor as a load.

In view of the above, composite capacitors has been developed. In a composite capacitor, a sub-capacitor that is a noise suppression capacitor of a small capacitance, is connected in parallel with the main capacitor.

In conventional composite capacitors, the sub-capacitor for noise suppression is a metallized film capacitor, as is the main capacitor for smoothing. (e.g., see WO 2010/067514 A1)

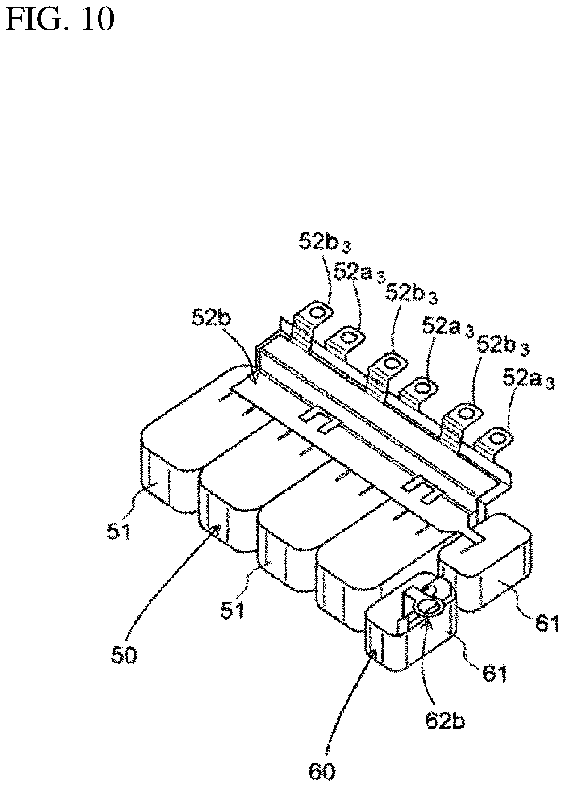

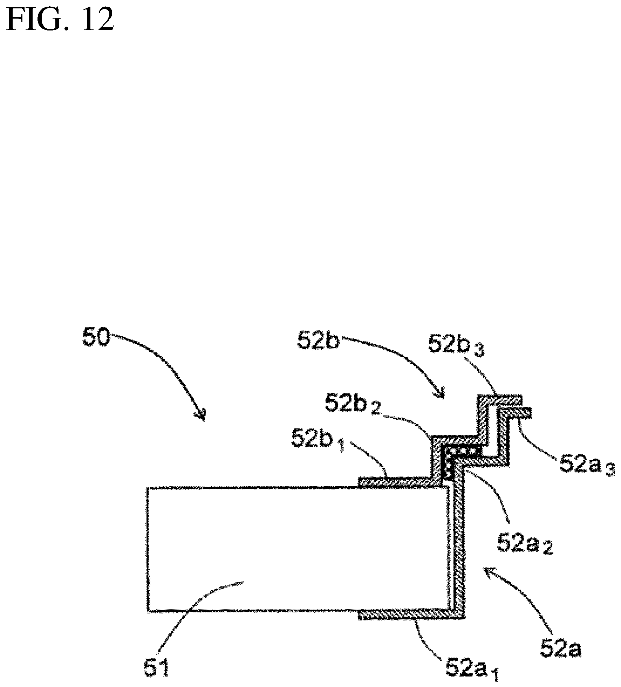

A conventional example is described below with reference to FIGS. 10 to 12. A composite capacitor shown in FIGS. 10 to 12 includes a main capacitor 50, capacitor elements 51, a plate conductor (bus bar) 52a, a plate conductor 52b, a sub-capacitor 60, and capacitor elements 61. The capacitor elements 51 have a large capacitance in the main capacitor 50. The plate conductor (bus bar) 52a (FIG. 12) is a cathode (N-pole) conductor in the main capacitor 50. The plate conductor 52b is an anode (P-pole) conductor in the capacitor 50. The capacitor elements 61 have a small capacitance in the sub-capacitor 60.

In the conventional example, the cathode is the bottom side and the anode is the top side. The large capacitance capacitor elements 51 are for smoothing. The small capacitance capacitor elements 61 are for noise reduction.

The smoothing main capacitor 50 includes a plurality of large capacitance capacitor elements 51. Each capacitor element 51 is formed of a wound metallized film. The metallized film is a dielectric film having electrodes deposited on its film surfaces. Each capacitor element 51 is structured by the wound or laminated metallized film and metal electrodes (metallicon) at its axial ends. The plurality of large capacitance smoothing capacitor elements 51 are disposed in parallel and in contact with each other. The cathode (N-pole) plate conductor 52a is electrically and mechanically connected to the metal electrode at the axial bottom of each capacitor element 51. The anode (P-pole) plate conductor 52b is electrically and mechanically connected to the metal electrode at the axial top of each capacitor element 51.

As shown in FIG. 12, the plate conductor 52b includes a plate conductor body 52bi, a plate conductor extension 52b₂, and plate conductor terminals 52b₃. The plate conductor body 52b₁ extends horizontally. The plate conductor extension 52b₂ rises from the plate conductor body 52b₁ and is bent to further extend horizontally. The plate conductor terminals 52b₃, which are branched in three pieces from the free end of the plate conductor extension 52b₂, extend in an inverted L-shape.

The plate conductor 52a is similar in shape to the plate conductor 52b. The plate conductor 52a includes a plate conductor body 52a₁ in a horizontal position, a plate conductor extension 52a₂, and three plate conductor terminals 52a₃ of an inverted L-shape.

The anode plate conductor terminals 52b₃ and the cathode plate conductor terminals 52a₃ are paired and alternately arranged laterally.

Thus, the smoothing capacitor elements 51 and the pair of plate conductors 52a, 52b form the main capacitor 50 of a relatively large capacitance.

Each of the noise suppression capacitor elements 61 in the sub-capacitor 60 of a relatively small capacitance is also formed of a wound metallized film. The sub-capacitor 60 is similar in structure to the capacitor element 51 except that its volume (lateral, depth and axial dimensions) is smaller. The capacitor element 61 is smaller in capacitance than the capacitor element 51. The capacitor element 61 is smaller in volume than the capacitor element 51. For example, the longitudinal, lateral, and height dimensions of the capacitor element 61 are smaller than those of the capacitor element 51.

The composite capacitor of the conventional example includes two capacitor elements 61 and four capacitor elements 51. Accordingly, as a whole, the capacitance of the sub-capacitor 60 is sufficiently smaller than that of the main capacitor 50.

Two capacitor elements 61 have their axial bottom metal electrodes connected to each other via a plate conductor. One capacitor element 61 is connected to the plate conductor body 52b₁ of the plate conductor 52b. The other capacitor element 61 is connected to a ground terminal 62b.

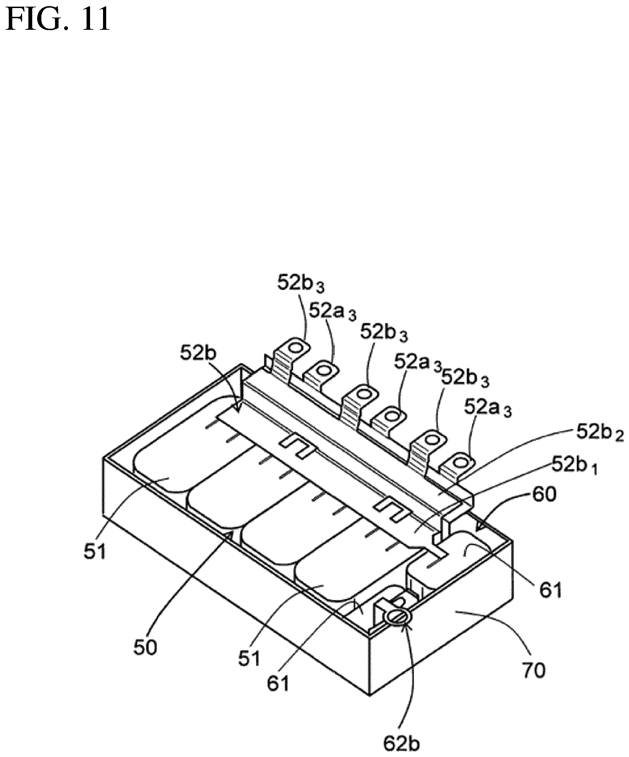

FIG. 11 shows the state in which an outer case 70 houses a capacitor unit with terminals, which consists of the plurality of capacitor elements structured as described above and the plate conductor (bus bar) connected thereto. Then, the outer case 70 is filled with molding resin by injection so that the capacitor unit is protected.

JP 2005 347561 A relates to a power semiconductor module in which switching chips and diode chips are provided on insulating substrates and a plurality of the insulating substrates are housed in a common case to form a bridge configuration. The P-side wiring and N-side wiring connecting the insulating substrates comprise flat main conductors that are insulated from each other and arranged in a laminated state, and strip-shaped sub-conductors that are formed at the ends of the two main conductors and insulated from each other and arranged in a laminated state, and the ends of the two sub-conductors serve as external connection terminals.

JP 2017 059572 A relates to a case mold type capacitor that comprises a resin case having an opening and a capacitor sub indenter to be stored in an interior of the resin case. To a capacitor element of the capacitor sub indenter is adhered an insulation paper that insulates one electrode from one bus bar, of the element. In the capacitor sub indenter, all sites other than respective outer terminals of a pair of bus bars are molded in the interior of the resin case, with resin filling material. In the other bus bar is formed a pressing piece that suppresses floating of the insulation paper adhered to the capacitor element. The pressing piece is formed in a position shifted laterally from a position of an expanding piece in a bus bar main body of the other bus bar.

### BRIEF SUMMARY

### TECHNICAL PROBLEM

Recent faster switching (higher frequency) of inverter equipment has increased noise in the high-frequency band. Such high frequency noise is becoming a regulatory target due to its impact on equipment performance and EMC (electromagnetic compatibility) standards.

Conventionally, ceramic capacitors or low capacitance metallized film capacitors have been used as noise suppression capacitors. However, in some cases, ceramic capacitors cannot fully meet the higher voltage withstand requirements. In addition, metallized film capacitors have difficulty in achieving the microcapacitance ([pF] order) that is optimum for addressing high-frequency noise in the high-frequency environment associated with faster switching speeds.

The conventional noise suppression capacitor is similar in structure to the body smoothing capacitor. That is, a noise suppression metallized film capacitor has its metal electrodes at its axial ends electrically connected to an external lead-out terminal (bus bar). The conventional noise suppression capacitor has a relatively large capacitance, e.g., 0.001 to 10 [µF].

Noise suppression sub-capacitors that address high-frequency noise, which is the noise suppression target of the present invention, are capacitors having a capacitance of the order of 50 to 200 [pF] at most, and desirably of the order of 10 to 50 [pF].

Ceramic capacitors have conventionally been used as small capacitance capacitors. A ceramic capacitor has a multilayer structure consisting of ultra-thin dielectric layers and ultra-thin internal electrodes. This structure makes it difficult to attain resistance to higher voltages (higher voltage withstand capability).

On the other hand, metallized film capacitors with a capacitance low enough to meet the requirement are extremely difficult to realize. Just an additional winding of the metallized film increases the capacitance by about 1 [nF]. Therefore, use of the capacitors having a relatively large capacitance of more than 1 [nF] is inevitable, which results in insufficient high-frequency noise reduction.

For the above reasons, reducing the capacitance of noise suppression capacitors required by the trend toward higher switching speeds of complementary high-side and low-side switching elements is extremely challenging. Simply minimizing the capacitance of noise suppression capacitors is not enough to handle the high-speed switching required in recent years. The requirement for higher voltage withstand capability cannot be met either.

An object of the present invention is to provide a composite capacitor that withstands higher voltages and handles the high-frequency operations of switching elements.

### SOLUTION TO PROBLEM

The composite capacitor according to the invention is defined by the features of claim 1 and further embodiments are defined by the appended claims. The following aspect may include some but not all features as literally defined in the claims and is present for illustration purposes only.

One aspect of the present disclosure provides a composite capacitor including:
a main capacitor including
   a capacitor element formed of a wound or laminated metallized film made up of a dielectric film and electrodes deposited on the dielectric film, the capacitor element including first and second metal electrodes at its axial ends,
   a first plate conductor including
      a first plate conductor body connected to the first metal electrode,
      a first plate conductor extension extending from the first plate conductor body, and
      a first plate conductor terminal extending from the first plate conductor extension,
   a second plate conductor including
      a second plate conductor body connected to the second metal electrode,
      a second plate conductor extension extending from the second plate conductor body, and
      a second plate conductor terminal extending from the second plate conductor extension; and
a parallel plate sub-capacitor smaller in capacitance than the main capacitor, the sub-capacitor including
   a first electrode plate including
      a first electrode plate body,
      a first electrode plate extension extending from the first electrode plate body, and
      a first electrode plate terminal extending from the first electrode plate extension and connectable to the first plate conductor terminal,
   a second electrode plate including
      a second electrode plate body disposed in parallel with the first electrode plate extension with a predetermined minor gap,
      a second electrode plate extension extending from the second electrode plate body, and
      a second electrode plate terminal extending from the second electrode plate extension and connectable to the second plate conductor terminal, and
   a sheet dielectric held between the first electrode plate body and the second electrode plate body.

### ADVANTAGEOUS EFFECTS

The present invention provides a composite capacitor that withstands higher voltages and handles high-frequency operations of switching elements.

### BRIEF DESCRIPTION OF DRAWINGS

FIG. 1 is a vertical cross-sectional view of a composite capacitor according to an embodiment.
FIG. 2A is a side view of a first plate conductor and a second plate conductor according to the embodiment.
FIG. 2B is a side view of a first electrode plate and a second electrode plate.
FIG. 2C is a side view of the first and second plate conductors and the first and second electrode plates combined with each other.
FIG. 3 is an exploded perspective view of a capacitor unit, the first plate conductor, and the second plate conductor in a main capacitor according to the embodiment.
FIG. 4 is a perspective view of the combined capacitor unit, first plate conductor, and second plate conductor in the main capacitor according to the embodiment.
FIG. 5 is an exploded perspective view of a sheet dielectric, a first electrode plate, and a second electrode plate in a sub-capacitor according to the embodiment.
FIG. 6 is a perspective view of the combined sheet dielectric, first electrode plate and second electrode plate in the main capacitor according to the embodiment.
FIG. 7 is a perspective view of the composite capacitor according to the embodiment as seen from the back side.
FIG. 8 is a perspective view of a capacitor main part according to the embodiment housed in an outer case.
FIG. 9 is a perspective view showing electrical and mechanical connections between a first plate conductor terminal and a first electrode plate terminal and between a second plate conductor terminal and a second electrode plate terminal overlaid on each other.
FIG. 10 is a perspective view of a composite capacitor main part according to a conventional example.
FIG. 11 is a perspective view of the capacitor main part according to the conventional example housed in an outer case.
FIG. 12 is a vertical cross-sectional view of the composite capacitor according to the conventional example.

### DETAILED DESCRIPTION

A composite capacitor according to an embodiment is described below.

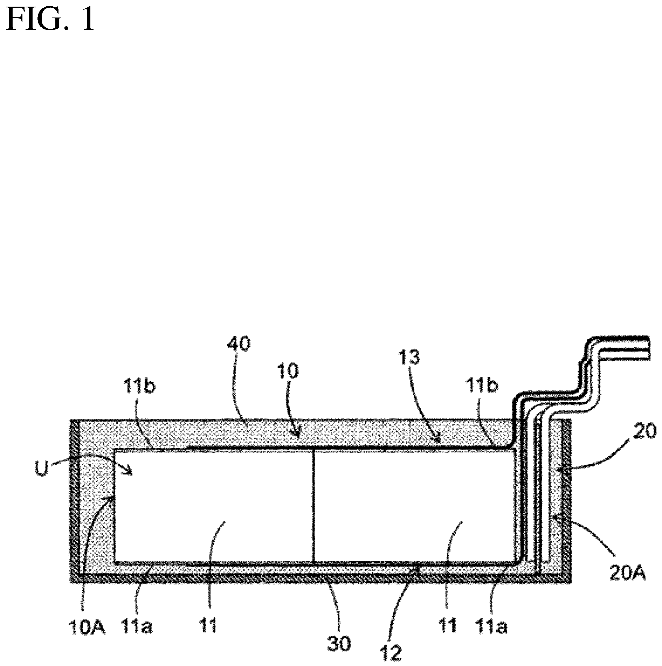

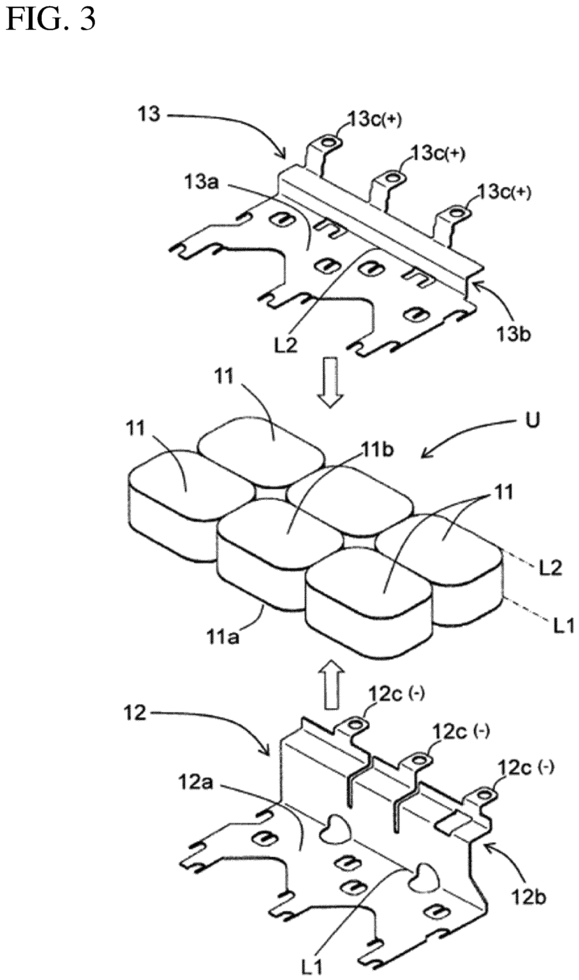

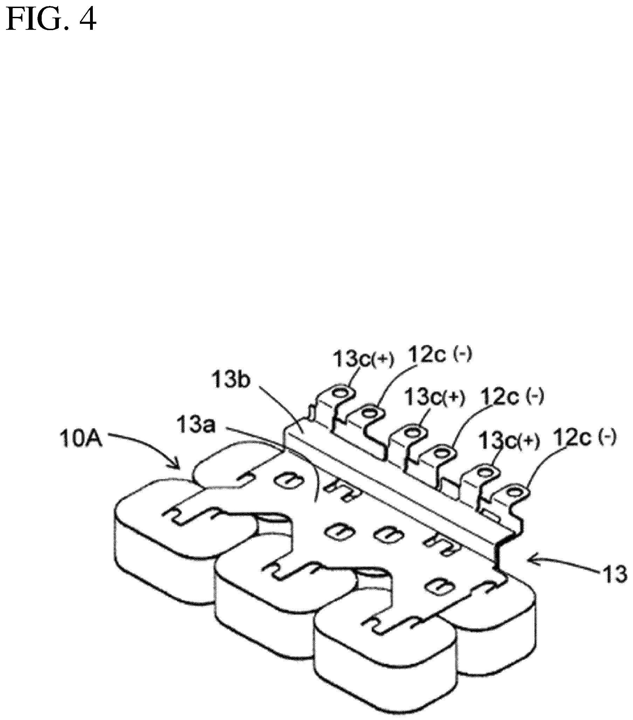

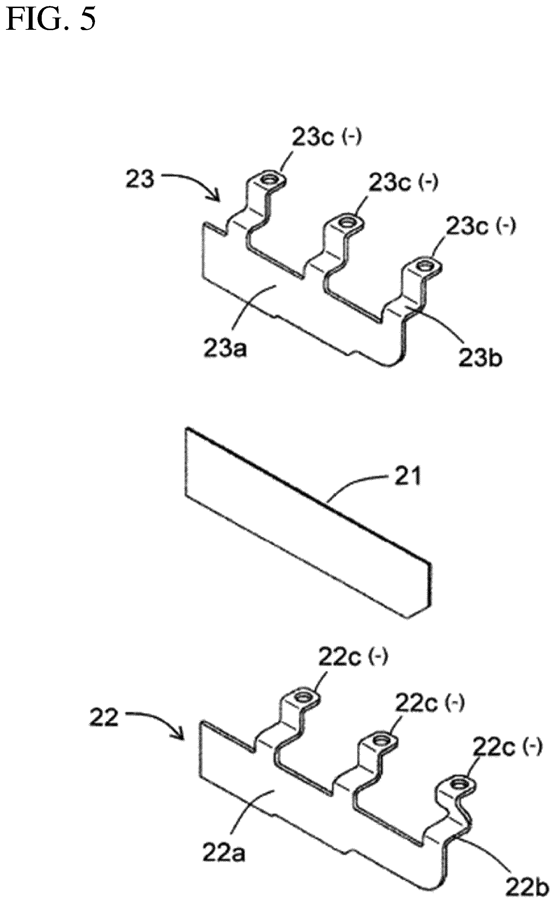

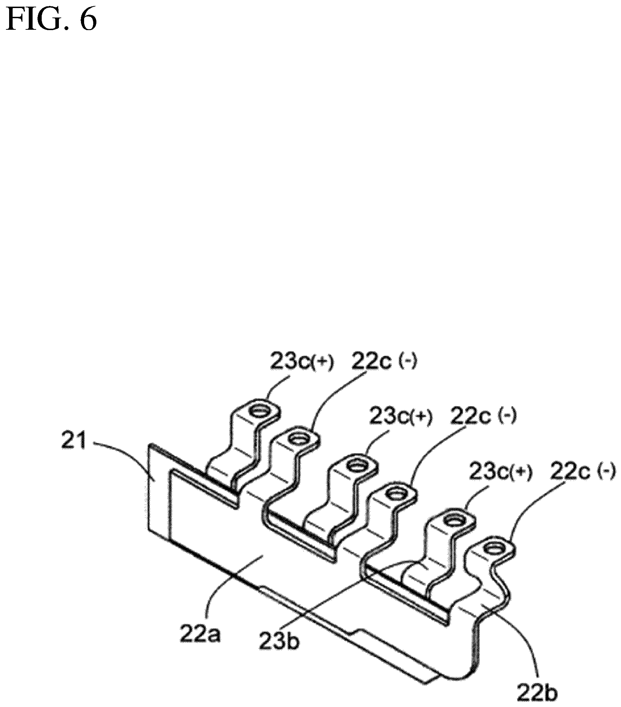

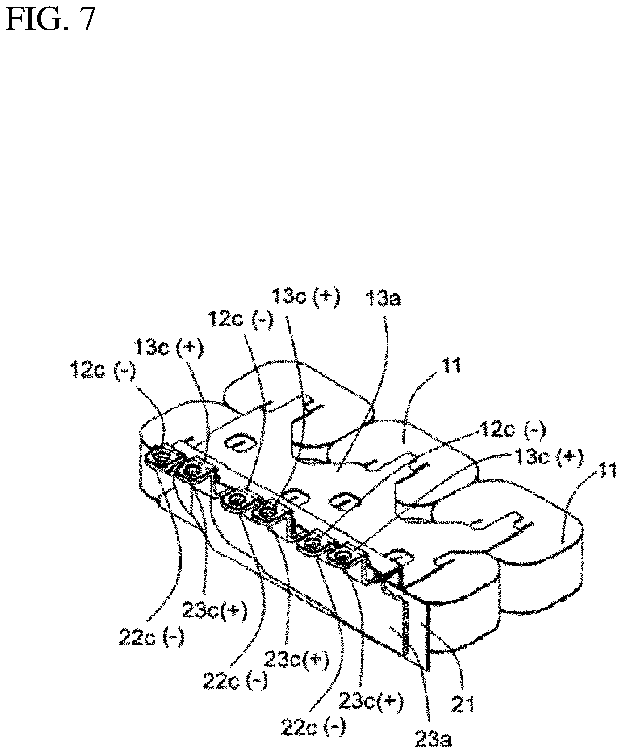

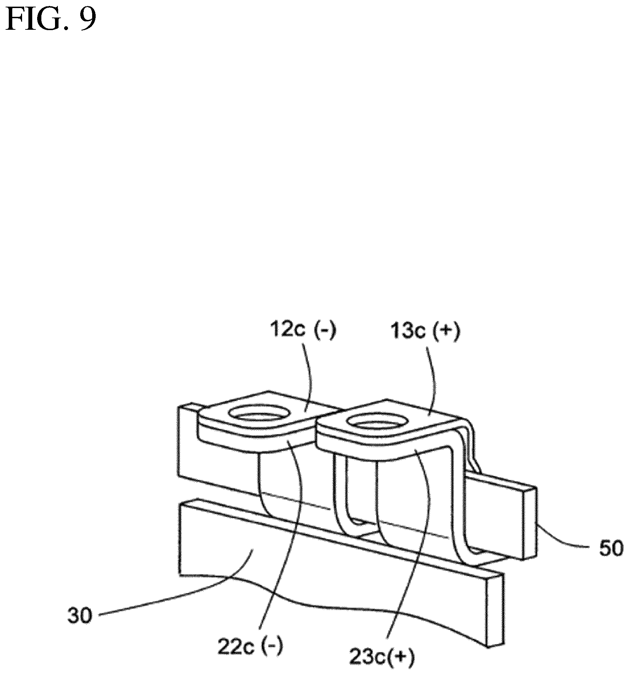

The composite capacitor in FIGS. 1 to 9 includes a main capacitor 10 and a sub-capacitor 20. The main capacitor 10 has a relatively large capacitance. The sub-capacitor 20 has a relatively small capacitance.

The main capacitor 10 includes capacitor elements 11, first metal electrodes 11a, second metal electrodes 11b, a first plate conductor (bus bar) 12, and a second plate conductor 13. The first metal electrodes 11a are formed at the lower surfaces of the capacitor elements 11. The second metal electrodes 11b are formed at the upper surfaces of the capacitor elements 11. The sub-capacitor 20 includes a sheet dielectric 21, a first electrode plate 22, and a second electrode plate 23.

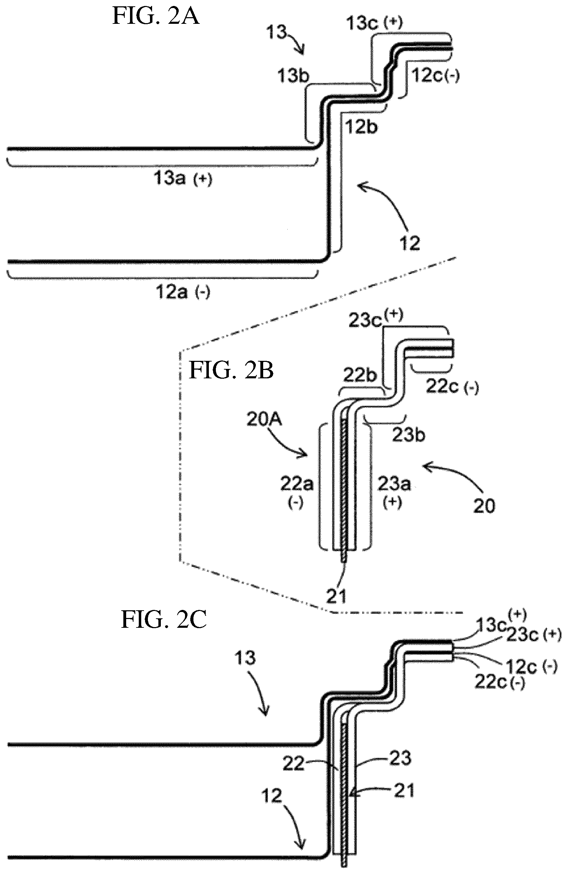

As shown in FIG. 2A, the first plate conductor 12 on the lower side includes a first plate conductor body 12a, a first plate conductor extension 12b, and first plate conductor terminals 12c. The second plate conductor 13 on the upper side includes a second plate conductor body 13a, a second plate conductor extension 13b, and second plate conductor terminals 13c. The first plate conductor 12 and the second plate conductor 13 are each made of a thin, flat, and highly conductive metal plate.

As shown in FIG. 2B, the first electrode plate 22 on the inner side includes a first electrode plate body 22a, first electrode plate extensions 22b, and first electrode plate terminals 22c. The second electrode plate 23 on the outer side includes a second electrode plate body 23a, second electrode plate extensions 23b , and second electrode plate terminals 23c. The first electrode plate 22 and the second electrode plate 23 are each made of a thin, flat, and highly conductive metal plate.

The first plate conductor 12, the second plate conductor 13, the first electrode plate 22, and the second electrode plate 23 are made of metal and are so malleable that they can be easily formed into the desired shape.

The main capacitor 10 includes the capacitor elements 11 and the pair of plate conductors 12, 13. The capacitor elements 11 are each formed of a wound metallized film. The metallized film is made of a dielectric film having metal deposited on its film surfaces. The main capacitor 10 may be formed by lamination instead of winding. Each capacitor element 11 is columnar, and elliptical as seen in a plan view. The first metal electrode 11a as the cathode is formed at the axial lower-end surface of the capacitor element 11. The second metal electrode 11b as the anode is formed at the axial upper-end surface of the capacitor element 11.

The main capacitor 10 can be formed as an assembly (semi-finished product) that can be handled independently.

A plurality of capacitor elements 11 are arranged in parallel in a matrix and form a capacitor unit U, a group of capacitor elements. The capacitor elements 11 are regularly arranged in a matrix with their axes parallel to each other and their side surfaces (circumferential surfaces) abutting each other. The capacitor unit U is substantially cuboidal as a whole.

The first plate conductor 12 consists entirely of a piece of thin conductive metal plate (e.g., copper plate). The first plate conductor body 12a is electrically and mechanically connected to all the first metal electrodes 11a at the lower end surfaces of the capacitor elements 11 constituting the capacitor unit U by, for example, soldering. The first plate conductor extension 12b extends integrally by being bent in an inverted L-shape at the edge of the first plate conductor body 12a. The first plate conductor terminals 12c extend integrally by being bent in an inverted L-shape at the edge of the first plate conductor extension 12b. Line L1 along which the first plate conductor extension 12b is bent relative to the first plate conductor body 12a is the site corresponding to the edges of the first metal electrodes 11a in the capacitor unit U.

The second plate conductor 13 consists entirely of a piece of thin conductive metal plate (e.g., copper plate). The second plate conductor body 13a is electrically and mechanically connected to all the second metal electrodes 11b at the upper end surfaces of the capacitor elements 11 constituting the capacitor unit U by, for example, soldering. The second plate conductor extension 13b extends integrally by being bent in an inverted L-shape at the edge of the second plate conductor body 13a. The second plate conductor terminals 13c extend integrally by being bent in an inverted L-shape at the edge of the second plate conductor extension 13b. Line L2 along which the second plate conductor extension 13b is bent relative to the second plate conductor body 13a is the site corresponding to the edges of the second metal electrodes 11b in the capacitor unit U, immediately above the line L1.

The capacitor unit U and the first and second plate conductor bodies 12a, 12b constitute a main capacitor main part 10A.

The vertical portion of the first plate conductor extension 12b is bent vertically upward so as to approach the vertical portion of the second plate conductor extension 13b, and extends parallel to one of the planar side surfaces, i.e., outer circumferential surfaces, of the capacitor unit U. This realizes the compact structure of the composite capacitor.

As shown in FIG. 2A, the first plate conductor extension 12b and the second plate conductor extension 13b are opposed to each other with a slight gap while maintaining the inverted L-shape.

The inverted L-shaped plate conductor extensions 12b, 13b extend in an elongated manner along the long side of the capacitor unit U.

The first plate conductor body 12a has the first plate conductor terminals 12c as the cathode on the free-end side via the first plate conductor extension 12b. The second plate conductor body 13a has the second plate conductor terminals 13c as the anode on the free-end side via the second plate conductor extension 13b. The first plate conductor terminals 12c as the cathode and the second plate conductor terminals 13c as the anode are paired.

The first and second plate conductor extensions 12b, 13b, forming a cathode and anode pair, are planarly opposed to each other in a close but non-contacting manner so as to be in parallel and insulated from each other. An insulating sheet (not shown) is interposed in the gap between the plate conductor extensions 12b, 13b.

The first and second plate conductor terminals 12c, 13c are both a plurality of branched lingulate pieces each having an inverted L-shape. The first plate conductor terminals 12c and the second plate conductor terminals 13c are disposed at substantially the same height with a horizontal gap from each other. Each plate conductor terminal 12c is disposed between adjacent second plate conductor terminals 13c. Each second plate conductor terminal 13c is disposed between adjacent first plate conductor terminals 12c.

Since the first and second plate conductor terminals 12c, 13c have the lingulate shape, the plurality of first plate conductor terminals 12c and the plurality of second plate conductor terminals 13c can be alternately arranged at substantially the same height and by substantially the same projection.

By matching the shapes and dimensions between the main capacitor 10 and the sub-capacitor 20 in advance, alignment can be performed quickly and easily by adjusting the relative positions of the main capacitor main part 10A and a sub-capacitor main part 20A.

The sub-capacitor main part 20A, which is the main part of the sub-capacitor 20, is a parallel plate small capacitance capacitor for suppressing high-frequency noise. The first and second electrode plate bodies 22a, 23a, a cathode and anode pair, are opposed to each other in parallel with a small gap. The sheet dielectric 21 is inserted and held in the gap between the opposed first and second electrode plate bodies 22a, 23a. The sub-capacitor main part 20A is thus structured.

The sub-capacitor 20 can be formed as an assembly (semi-finished product) that can be handled independently.

The first electrode plate body 22a has the first electrode plate terminals 22c as the cathode on the free-end side via the first electrode plate extensions 22b. The second electrode plate body 23a has the second electrode plate terminals 23c as the anode on the free-end side via the second electrode plate extensions 23b. The first electrode plate terminals 22c as the cathode and the second electrode plate terminals 23c as the anode are paired.

The first and second electrode plate extensions 22b, 23b, a cathode and anode pair, are planarly opposed to each other in a close but non-contacting manner so as to be in parallel and insulated from each other. An insulating sheet (not shown) is interposed in the gap between the plate conductor extensions 22b, 23b.

The first and second electrode plate extensions 22b, 23b are both a plurality of branched lingulate pieces each having an inverted L-shape. From the first and second electrode plate extensions 22b, 23b, a plurality of first and second electrode plate terminals 22c, 23c are branched respectively, each in a lingulate and inverted L-shape.

The first electrode plate extensions 22b and the second electrode plate extensions 23b are disposed at substantially the same height with a horizontal gap from each other. Each electrode plate extension 22b is disposed at an intermediate position between adjacent second electrode plate extensions 23b. Each second electrode plate extension 23b is disposed at an intermediate position between adjacent first electrode plate extensions 22b.

The first electrode plate terminals 22c and the second electrode plate terminals 23c are disposed at substantially the same height with a horizontal gap from each other. Each first electrode plate terminal 22c is disposed at an intermediate position between adjacent second electrode plate terminals 23c. Each second electrode plate terminal 23c is disposed at an intermediate position between adjacent first electrode plate terminals 22c.

The main capacitor main part 10A and the sub-capacitor main part 20A are disposed in close proximity to each other. The sub-capacitor main part 20A is disposed in parallel and in close proximity to one of the planar side surfaces, i.e., the outer circumferential side surfaces, of the main capacitor main part 10A having a substantially cuboidal shape. Here, the sub-capacitor main part 20A is in an upright position. As shown in FIG. 2C, the extensions of four categories, namely, the second plate conductor extension 13b, the first plate conductor extension 12b, the first electrode plate extensions 22b, and the second electrode plate extensions 23b are opposed to and overlaid on each other in the horizontal direction.

The first plate conductor extension 12b and the first electrode plate extensions 22b are opposed and in adjacent to each other. The second plate conductor extension 13b and the second electrode plate extensions 23b externally catch the first plate conductor extension 12b and the first electrode plate extensions 22b between them. Thus, between the first and second plate conductor extensions 12b, 13b and the first and second electrode plates 22b, 23b, the extensions of the same polarity attain the same position. Therefore, the extensions of the same polarity are electrically and mechanically connected to each other.

The second plate conductor 13 and the second electrode plate 23 are opposed and in adjacent to each other. Alternatively, the first plate conductor 12 and the first electrode plate 22 may externally catch the second plate conductor 13 and the second electrode plate 23 between them.

The first and second plate conductor extensions 12b, 13b are opposed to each other in parallel. The first and second electrode plate extensions 22b, 23b are opposed to each other in parallel. The first and second plate conductor extensions 12b, 13b and the first and second electrode plate extensions 22b, 23b are planarly opposed to each other in a close but non-contacting manner so as to be in parallel and insulated from each other.

The first plate conductor terminals 12c and the first electrode plate terminals 22c are overlaid on each other. The second plate conductor terminals 13c and the second electrode plate terminals 23c are overlaid on each other.

The first plate conductor terminals 12c and the first electrode plate terminals 22c, both of which are cathode and are opposed to and overlaid on each other on the inner side, are disposed lower. The second plate conductor terminals 13c and the second electrode plate terminals 23c, both of which are anode and are opposed to and overlaid on each other on the outer side, are disposed higher.

A plurality of first and second plate conductor terminals 12c, 13c in the main capacitor 10 and a plurality of first and second electrode plate terminals 22c, 23c in the sub-capacitor 20 are in contact with each other by the terminals of the same polarity. The terminals each have a through fastening hole for inserting a fastening element such as a bolt. The fastening holes of the terminals in contact with each other concentrically overlap with each other. The overlaid terminals may be electrically and mechanically connected to each other by soldering or the like before being fastened. Alternatively, they can be firmly pressed together by fastening and thus be electrically and mechanically connected to each other.

As shown in FIG. 1, the capacitor main part 10A is housed in an outer case 30 made of resin. Molding resin 40 is injected into the outer case 30. The molding resin 40 covers and protects the entire capacitor unit U, the entire first and second plate conductor bodies 12a, 13a, and the lower vertical portion of the first and second plate conductor extensions 12b, 13b. This prevents air from entering between the plate conductors (between the electrodes) and stabilizes product quality.

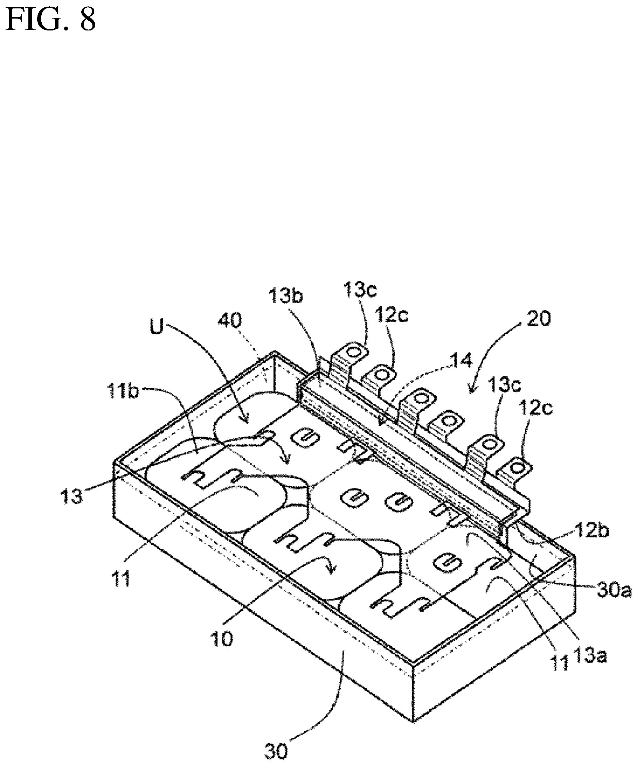

The lower vertical portion of the first and second plate conductor extensions 12b, 13b extends along the inner surface of a side plate 30a of the outer case 30. As shown in FIG. 8, the higher horizontal portion of the first and second plate conductor extensions 12b, 13b is disposed along the upper end surface of the side plate 30a. The higher horizontal portion of the first and second plate conductor extensions 12b, 13b is positioned on the outer side of the outer case 30 with the first and second plate conductor terminals 12c, 13c.

In this manner, the main capacitor 10 with a relatively large capacitance and the sub-capacitor 20 with a relatively small capacitance are combined with each other to structure a composite capacitor. The sub-capacitor 20 is connected in parallel with the main capacitor 10 via the first and second electrode plate terminals 22c, 23c and the first and second plate conductor terminals 12c, 13c.

The sub-capacitor 20 is a parallel plate capacitor in which the sheet dielectric 21 is held in the gap between the opposed first and second electrode plate bodies 22a, 23a. This achieves the micro-capacitance that can address high-frequency noise.

The parallel-plate sub-capacitor 20 occupies less space than the metallized-film main capacitor 10. Furthermore, since the sub-capacitor main part 20A has a thin and flat shape, it can be easily disposed in close proximity to and along the side surface of the bulky main capacitor main part 10A. This simplifies both the structure and the layout space. Thus, the present embodiment greatly reduces high-frequency noise and the burden in terms of space and cost.

The composite capacitor according to the embodiment has a simple shape and a compact structure.

The sub-capacitor 20 according to the embodiment is a parallel plate capacitor with a smaller capacitance than the conventional example, i.e., a metallized film capacitor of the same type as the main capacitor 10. This achieves the micro-capacitance that can handle the recent high-frequency switching operations. It also reduces high-frequency noise.

The electrode plates of the parallel plate sub-capacitor 20 may be made of a material similar to that of the plate conductors. Thus, in contrast to ceramic capacitors, the present embodiment meets the requirement of withstanding higher voltages.

The specifications of the sheet dielectric 21 are, for example, 0.1 to 5 mm in thickness and 1 to 20 cm² in area. The material of the sheet dielectric 21 is, for example, PP (polypropylene), PBT (polybutylene terephthalate), and PPS (polyphenylene sulfide). In this case, the dielectric constant _{ε} is 2 to 4, the capacitance is 0.1 to 500 [pF], and the frequency of high-frequency noise that can be rejected is 50 MHz or higher.

While the present embodiment exemplarily shows the case-molding type, the present invention is also applicable to the caseless type.

The noise suppression sub-capacitor 20 may be disposed only inside or outside the outer case 30, or continuously inside and outside the outer case 30.

While the capacitor unit U according to the embodiment is explained as a group of capacitor elements 11 arranged in a matrix, the present invention includes a plurality of capacitor elements 11 in a row, a plurality of capacitor elements 11 in a column, and a single capacitor element 11.

Note that, the term "parallel" in the present invention is not limited by straightness or flatness. That is, the present invention is not limited to a state where flat surfaces are disposed with a predetermined distance from each other, but also a state where curved surfaces are disposed with a predetermined distance from each other. For example, "parallel" includes a curved state where the surfaces smoothly curve, a bent state where the surfaces change their directions at a certain angle, and various curved or bent states where the foregoing are mixed.

In addition, the term "planarly opposed" limits the mode "parallel". It refers to the state in which one plate conductor extension or electrode plate extension is opposed in parallel to the other plate conductor extension or electrode plate extension with a distance from each other in the direction perpendicular to their planar surfaces.

### Reference Signs List

- 10: main capacitor

- 10A: main capacitor main part
- 11: capacitor element
- 11a: first metal electrode
- 11b: second metal electrode
- 12: first plate conductor
- 13: second plate conductor
- 12a: first plate conductor body
- 12b: first plate conductor extension
- 12c: first plate conductor terminal
- 13a: second plate conductor body
- 13b: second plate conductor extension
- 13c: second plate conductor terminal
- 14: sheet dielectric
- 20: sub-capacitor (for suppressing noise)
- 20A: sub-capacitor main part
- 21: sheet dielectric
- 22: first electrode plate
- 22a: first electrode plate body
- 22b: first electrode plate extension
- 22c: first electrode plate terminal
- 23: second electrode plate
- 23a: second electrode plate body
- 23b: second electrode plate extension
- 23c: second electrode plate terminal
- 30: outer case
- 40: molding resin
- U: capacitor unit

## Claims

1. A composite capacitor comprising:
a main capacitor (10) including
a capacitor element (11) formed of a wound or laminated metallized film made up of a dielectric film and electrodes deposited on the dielectric film, the capacitor element (11) including first and second metal electrodes (11a, 11b) at its axial ends,
a first plate conductor (12) including
a first plate conductor body (12a) connected to the first metal electrode (11a),
a first plate conductor extension (12b) extending from the first plate conductor body (12a), and
a first plate conductor terminal (12c) extending from the first plate conductor extension (12b),
a second plate conductor (13) including
a second plate conductor body (13a) connected to the second metal electrode (11b),
a second plate conductor extension (13b) extending from the second plate conductor body (13a), and
a second plate conductor terminal (13c) extending from the second plate conductor extension (13b); and
a parallel plate sub-capacitor (20) smaller in capacitance than the main capacitor (10), the sub-capacitor (20) including
a first electrode plate (22) including
a first electrode plate body (22a),
a first electrode plate extension (22b) extending from the first electrode plate body (22a), and
a first electrode plate terminal (22c) extending from the first electrode plate extension (22b) and connectable to the first plate conductor terminal (12c),
a second electrode plate (23) including
a second electrode plate body (23a) disposed in parallel with the first electrode plate body (22a) with a predetermined gap,
a second electrode plate extension (23b) extending from the second electrode plate body (23a), and
a second electrode plate terminal (23c) extending from the second electrode plate extension (23b) and connectable to the second plate conductor terminal (13c), and
a sheet dielectric (21) held between the first electrode plate body (22a) and the second electrode plate body (23a),
**characterized in that**
the first and second plate conductor terminals (12c, 13c) are both a plurality of branched and projecting lingulate pieces,
the first plate conductor terminals (12c) are each disposed at an intermediate position between adjacent ones of the second plate conductor terminals (13c),
the first and second electrode plate terminals (22c, 23c) are both a plurality of branched and projecting lingulate pieces,
the first electrode plate terminals (22c) are each disposed at an intermediate position between adjacent ones of the second electrode plate terminals (23c),
the first plate conductor terminals (12c) and the first electrode plate terminals (22c) are overlaid on each other, and
the second plate conductor terminals (13c) and the second electrode plate terminals (23c) are overlaid on each other.

2. The composite capacitor according to claim 1, wherein the sub-capacitor (20) is disposed in parallel with one of outer circumferential side surfaces of the main capacitor (10).

3. The composite capacitor according to claim 1 or 2, wherein
the first plate conductor extension (12b) and the second plate conductor extension (13b) are planarly opposed to each other in a close but non-contacting manner so as to be in parallel and insulated from each other, and
the first electrode plate extension (22b) and the second electrode plate extension (23b) are planarly opposed to each other in a close but non-contacting manner so as to be in parallel and insulated from each other.

4. The composite capacitor according to claim 3, wherein a pair of the first and second plate conductor extensions (12b, 13b) and a pair of the first and second electrode plate extensions (22b, 23b) are planarly opposed to each other in a close but non-contacting manner so as to be in parallel and insulated from each other.

5. The composite capacitor according to any one of claims 1 to 4, wherein the sheet dielectric (21) has a dielectric constant in a range of 2 to 4.

6. The composite capacitor according to any one of claims 1 to 5, further comprising an outer case (30) for housing the main capacitor (10) and the sub-capacitor (20), and
the main capacitor (10) and the sub-capacitor (20) are covered with molding resin (40) injected into the outer case (30).

## Patentansprüche

1. Verbundkondensator, der aufweist:
einen Hauptkondensator (10), der aufweist:
ein Kondensatorelement (11), das aus einer gewickelten oder laminierten metallisierten Folie ausgebildet ist, die aus einer dielektrischen Folie und auf der dielektrischen Folie aufgebrachten Elektroden besteht, wobei das Kondensatorelement (11) an seinen axialen Enden eine erste und eine zweite Metallelektrode (11a, 11b) aufweist,
einen ersten Plattenleiter (12), der aufweist
einen ersten Plattenleiterkörper (12a), der mit der ersten Metallelektrode (11a) verbunden ist,
eine erste Plattenleiterverlängerung (12b), die sich vom ersten Plattenleiterkörper (12a) erstreckt, und
einen ersten Plattenleiteranschluss (12c), der sich von der ersten Plattenleiterverlängerung (12b) erstreckt,
einen zweiten Plattenleiter (13), der aufweist
einen zweiten Plattenleiterkörper (13a), der mit der zweiten Metallelektrode (11b) verbunden ist,
eine zweite Plattenleiterverlängerung (13b), die sich vom zweiten Plattenleiterkörper (13a) erstreckt, und
einen zweiten Plattenleiteranschluss (13c), der sich von der zweiten Plattenleiterverlängerung (13b) erstreckt; und
einen Parallelplatten-Subkondensator (20), dessen Kapazität kleiner ist als die des Hauptkondensators (10), wobei der Subkondensator (20) aufweist
eine erste Elektrodenplatte (22), die aufweist
einen ersten Elektrodenplattenkörper (22a),
eine erste Elektrodenplattenverlängerung (22b), die sich vom ersten Elektrodenplattenkörper (22a) erstreckt, und
einen ersten Elektrodenplattenanschluss (22c), der sich von der ersten Elektrodenplattenverlängerung (22b) erstreckt und mit dem ersten Plattenleiteranschluss (12c) verbindbar ist,
eine zweite Elektrodenplatte (23), die aufweist
einen zweiten Elektrodenplattenkörper (23a), der parallel zum ersten Elektrodenplattenkörper (22a) mit einem vorbestimmten Abstand angeordnet ist,
eine zweite Elektrodenplattenverlängerung (23b), die sich vom zweiten Elektrodenplattenkörper (23a) erstreckt, und
einen zweiten Elektrodenplattenanschluss (23c), der sich von der zweiten Elektrodenplattenverlängerung (23b) erstreckt und mit dem zweiten Plattenleiteranschluss (13c) verbindbar ist, und
ein zwischen dem ersten Elektrodenplattenkörper (22a) und dem zweiten Elektrodenplattenkörper (23a) gehaltenes Folien-Dielektrikum (21),
**dadurch gekennzeichnet, dass**
die ersten und zweiten Plattenleiteranschlüsse (12c, 13c) beide aus mehreren verzweigten und vorstehenden zungenförmigen Stücken bestehen,
die ersten Plattenleiteranschlüsse (12c) jeweils an einer Zwischenposition zwischen benachbarten der zweiten Plattenleiteranschlüsse (13c) angeordnet sind,
die ersten und zweiten Elektrodenplattenanschlüsse (22c, 23c) jeweils aus mehreren verzweigten und vorstehenden zungenförmigen Stücken bestehen,
die ersten Elektrodenplattenanschlüsse (22c) jeweils an einer Zwischenposition zwischen benachbarten der zweiten Elektrodenplattenanschlüsse (23c) angeordnet sind,
die ersten Plattenleiteranschlüsse (12c) und die ersten Elektrodenplattenanschlüsse (22c) übereinander liegen, und
die zweiten Plattenleiteranschlüsse (13c) und die zweiten Elektrodenplattenanschlüsse (23c) übereinander liegen.

2. Verbundkondensator nach Anspruch 1, wobei der Subkondensator (20) parallel zu einer der Außenumfangsseitenflächen des Hauptkondensators (10) angeordnet ist.

3. Verbundkondensator nach Anspruch 1 oder 2, wobei
die erste Plattenleiterverlängerung (12b) und die zweite Plattenleiterverlängerung (13b) einander in einer engen, aber berührungslosen Weise eben gegenüberliegen, so dass sie parallel zueinander und voneinander isoliert sind, und
die erste Elektrodenplattenverlängerung (22b) und die zweite Elektrodenplattenverlängerung (23b) einander in einer engen, aber berührungslosen Weise eben gegenüberliegen, so dass sie parallel zueinander und voneinander isoliert sind.

4. Verbundkondensator nach Anspruch 3, wobei ein Paar aus der ersten und der zweiten Plattenleiterverlängerung (12b, 13b) und ein Paar aus der ersten und der zweiten Elektrodenplattenverlängerung (22b, 23b) einander in einer engen, aber berührungslosen Weise eben gegenüberliegen, so dass sie parallel zueinander und voneinander isoliert sind.

5. Verbundkondensator nach einem der Ansprüche 1 bis 4, wobei das Folien-Dielektrikum (21) eine Dielektrizitätskonstante im Bereich von 2 bis 4 aufweist.

6. Verbundkondensator nach einem der Ansprüche 1 bis 5, der ferner ein Außengehäuse (30) zur Aufnahme des Hauptkondensators (10) und des Subkondensators (20) aufweist, und
der Hauptkondensator (10) und der Subkondensator (20) mit einem in das Außengehäuse (30) eingespritzten Formharz (40) bedeckt sind.

## Revendications

1. Condensateur composite, comprenant :
un condensateur principal (10) présentant
un élément de condensateur (11) formé par un film métallisé enroulé ou stratifié constitué d'un film diélectrique et d'électrodes déposées sur le film diélectrique, ledit élément de condensateur (11) présentant une première et une deuxième électrodes métalliques (11a, 11b) à ses extrémités axiales,
un premier conducteur en plaque (12) présentant
un corps de premier conducteur en plaque (12a) raccordé à la première électrode métallique (11a),
une extension de premier conducteur en plaque (12b) s'étendant à partir du corps de conducteur en plaque (12a), et
une borne de premier conducteur en plaque (12c) s'étendant à partir de l'extension de premier conducteur en plaque (12b),
un deuxième conducteur en plaque (13) présentant
un corps de deuxième conducteur en plaque (13a) raccordé à la deuxième électrode métallique (11b),
une extension de deuxième conducteur en plaque (13b) s'étendant à partir du corps de deuxième conducteur en plaque (13a), et
une borne de deuxième conducteur en plaque (13c) s'étendant à partir de l'extension de deuxième conducteur en plaque (13b) ; et
un sous-condensateur en plaque parallèle (20) dont la capacité est inférieure à celle du condensateur principal (10), ledit sous-condensateur (20) présentant
une première plaque d'électrode (22) présentant
un corps de première plaque d'électrode (22a),
une extension de première plaque d'électrode (22b) s'étendant à partir du corps de première plaque d'électrode (22a), et
une borne de première plaque d'électrode (22c) s'étendant à partir de l'extension de première plaque d'électrode (22b) et pouvant être raccordée à la borne de premier conducteur en plaque (12c),
une deuxième plaque d'électrode (23) présentant
un corps de deuxième plaque d'électrode (23a) disposé parallèlement au corps de première plaque d'électrode (22a) avec un espacement prédéterminé,
une extension de deuxième plaque d'électrode (23b) s'étendant à partir du corps de deuxième plaque d'électrode (23a), et
une borne de deuxième plaque d'électrode (23c) s'étendant à partir de l'extension de deuxième plaque d'électrode (23b) et pouvant être raccordée à la borne de deuxième conducteur en plaque (13c), et
une feuille diélectrique (21) maintenue entre le corps de première plaque d'électrode (22a) et le corps de deuxième plaque d'électrode (23a),
**caractérisé en ce que**
les bornes de premier et de deuxième conducteurs en plaque (12c, 13c) sont toutes deux constituées d'une pluralité de pièces en forme de languettes ramifiées et saillantes,
les bornes de premier conducteur en plaque (12c) sont disposées chacune à un emplacement médian entre des bornes adjacentes parmi les bornes de deuxième conducteur en plaque (13c),
les bornes de première et de deuxième plaques d'électrode (22c, 23c) sont toutes deux constituées d'une pluralité de pièces en forme de languettes ramifiées et saillantes,
les bornes de première plaque d'électrode (22c) sont disposées chacune à un emplacement médian entre des bornes adjacentes parmi les bornes de deuxième plaque d'électrode (23c),
les bornes de premier conducteur en plaque (12c) et les bornes de première plaque d'électrode (22c) sont superposées les unes aux autres, et
les bornes de deuxième conducteur en plaque (13c) et les bornes de deuxième plaque d'électrode (23c) sont superposées les unes aux autres.

2. Condensateur composite selon la revendication 1, où le sous-condensateur (20) est disposé en parallèle avec l'une des surfaces latérales circonférentielles extérieures du condensateur principal (10).

3. Condensateur composite selon la revendication 1 ou la revendication 2, où l'extension du premier conducteur en plaque (12b) et l'extension du deuxième conducteur en plaque (13b) sont opposées l'une à l'autre dans un plan, de manière rapprochée mais sans contact, de manière à être parallèles et isolées l'une de l'autre, et
l'extension de première plaque d'électrode (22b) et l'extension de deuxième plaque d'électrode (23b) sont opposées l'une à l'autre dans un plan, de manière rapprochée mais sans contact, de manière à être parallèles et isolées l'une de l'autre.

4. Condensateur composite selon la revendication 3, où une paire constituée des extensions de premier et de deuxième conducteurs en plaque (12b, 13b) et une paire constituée des extensions de première et de deuxième plaques d'électrode (22b, 23b) sont opposées l'une à l'autre dans un plan, de manière rapprochée mais sans contact, de manière à être parallèles et isolées l'une de l'autre.

5. Condensateur composite selon l'une des revendications 1 à 4, où la feuille diélectrique (21) a une constante diélectrique comprise entre 2 et 4.

6. Condensateur composite selon l'une des revendications 1 à 5, présentant en outre un boîtier extérieur (30) destiné à loger le condensateur principal (10) et le condensateur secondaire (20), et
où le condensateur principal (10) et le condensateur secondaire (20) sont recouverts d'une résine de moulage (40) injectée dans le boîtier extérieur (30).
